## Europäisches Patentamt

## European Patent Office

## Office européen des brevets

(11) Veröffentlichungsnummer: **0 118 842**
**B1**

(12) **EUROPÄISCHE PATENTSCHRIFT**

(45) Veröffentlichungstag der Patentschrift:
**27.04.88**

(21) Anmeldenummer: **84102162.9**

(22) Anmeldetag: **01.03.84**

(51) Int. Cl.⁴: **F 16 L 55/02,** F 01 N 1/24,
F 02 M 35/12

(54) **Schalldämpfer für Gase führende Leitungen.**

(30) Priorität: **10.03.83 DE 8306953 U**

(43) Veröffentlichungstag der Anmeldung:
**19.09.84 Patentblatt 84/38**

(45) Bekanntmachung des Hinweises auf die Patenterteilung:
**27.04.88 Patentblatt 88/17**

(84) Benannte Vertragsstaaten:
**AT BE CH FR GB LI NL SE**

(56) Entgegenhaltungen:
**DE-A-1 525 688**
**DE-A-2 540 479**
**FR-A-2 044 428**
**FR-A-2 522 390**
**GB-A-2 021 692**

(73) Patentinhaber: **Westaflexwerk GmbH & Co. KG, 5, Thaddäusstrasse, D-4830 Gütersloh 1 (DE)**

(72) Erfinder: **Schaten, Heinz, An der Landwehr 19, D-4830 Gütersloh 1 (DE)**

(74) Vertreter: **Meldau, Gustav, Dipl.- Ing., Patentanwälte Dipl.- Ing. Gustav Meldau Dipl.- Phys. Dr. H.- J. Strauss Postfach 2452 Vennstrasse 9, D-4830 Gütersloh 1 (DE)**

EP 0 118 842 B1

## Beschreibung

Die Erfindung bezieht sich auf einen Schalldämpfer für Gase führende Leitungen, bestehend aus einem gerillten und gelochten, flexiblen Rohr, das zumindest im Bereich der Lochungen von einem schalldämmenden Material, beispielsweise in Form von Glasfasermatten umgeben und mit einem äußeren umgebenden Rohr, das ebenfalls gerillt und flexibel ausgebildet sowie mit endweisen Abschlüssen versehen ist. Derartige Schalldämpfer werden beispielsweise für Ansaug- und Auspuffleitungen von Motoren verwendet; sie finden jedoch auch Verwendung in Luftführungssystemen, beispielsweise bei Klimaanlagen, Warmluftheizungen und dergleichen.

Bei bisher bekannten Schalldämpfern dieser Art wurden die eigentlichen Aufsätze auf den gelochten Teil des Gasführungsrohres, die aus einem schalldämmenden Material und einem dieses umgebenen weiteren, vorzugsweise flexiblen Rohr bestehen, an beiden Enden gehalten von im Durchmesser mehrfach abgestuften Endflanschen oder Kappenabschlüssen. Eine besondere Ausführungsform dieser bekannten Endabschlüsse für die Schalldämpfer bestand darin, daß die vorzugsweise aus einem Blechteil geformten Abschlüsse einstückig in einen Rohrverbinder übergingen. Zu diesem Zweck hatten die Kappenabschlüsse einen weiten äußeren Durchmesser, der das äußere Rohr des Schalldämpfers übergriff, einen daran nach außen anschließenden Durchmesser, der das innere Rohr, das eigentliche gasführende Rohr übergriff, wobei es erforderlich war, daß dieses gasführende Rohr um ein vorgegebenes Maß über das äußere Rohr hinausstand, um in diesen Teil des Kappenabschlusses und Rohrverbinders einzugreifen. Ein weiterer, noch etwas engerer, anschließender äußerster Rohrabschnitt, der also den geringsten Durchmesser hatte, diente zum Einstecken in die anschließenden, gasführenden Rohre. Es wahr jedoch auch erforderlich, die Verbindung zu dem anschließenden Rohr derart auszubilden, daß sie dieses anschließende Rohr übergriff, d.h. der Rohrverbinder-Endteil mußte nach einem eingezogenen Bund, der die Einstecktiefe des Innenrohres in dem Schalldämpfer begrenzte, wieder auf gleichem Durchmesser weiterführen, so daß das folgende Rohr eingesteckt werden konnte.

Diese bisher bekannten Endkappen von Schalldämpfern mußten auf Drückbänken hergestellt werden. Die Bearbeitung ist verhältnismäßig aufwendig. Es mußten zwei verschiedene Ausführungen auf Lager gehalten werden. Die vorproduzierten Schalldämpfer haben unterschiedliche Länge, insbesondere für die Anschlüße, so daß auch hier eine besondere Lagerhaltung erforderlich war.

Es konnte auch gelegentlich vorkommen, daß beim Biegen dieser Schalldämpfer das innere, gasführende Rohr, das ja in dem umgebenden, schalldämmenden Material nicht sehr fest geführt oder eingespannt ist, die Biegung nicht korrekt mitmacht und sich beim Biegen beispielsweise nicht genügend auslängt bzw. sogar verkürzt, so daß es aus den Rohrverbinderanschlüssen mit seinen Enden teilweise oder vollständig herausgleitet.

Aus der GB-A- 2021692 ist ein Schalldämpfer für Gase führende Leitungen bekannt, der aus einem gelochten Rohr besteht, das im Bereich der Lochungen von einem schalldämmenden Material umgeben ist, sowie einem äußeren umgebenen Rohr und aus endweisen Abschlüssen besteht. Die Abschlüsse sind als Ringkappen ausgebildet, deren äußerer Schenkel dem Außenumfang des äußeren Rohres anliegt, deren innerer Schenkel dem Außenumfang des inneren Rohres anliegt und deren Basis den Zwischenraum zwischen dem äußeren und dem inneren Rohr abschließt.

Bei derartigen vorbekannten Schalldämpfern sind die einzelnen Rohre, aus denen die Schalldämpfer bestehen, nicht gerillt und demnach auch nicht flexibel. Auch weisen die endweisen Abschlüsse einen U-förmigen Querschnitt auf, dessen Öffnung nach außen steht, so daß zur Halterung an den Rohren die achsparallel nach außen gerichtet sind Flanschen dienen, wobei der äußere Flansch zur Aufnahme des äußeren Rohrendes umgebördelt ist.

Demgegenüber hat sich die Erfindung die Aufgabe gestellt, einen Schalldämpfer der gattungsgemäßen Art zu schaffen, bei dem die endweisen Abschlüsse derart ausgebildet sind, daß sie gegeneinander austauschbar sind und unabhängig von den Rohrverbindern sind, so daß handelsübliche Rohrverbinder verwendet werden können, wobei aufgrund der besonderen Ausbildung der Endabschlüsse die Schalldämpfer in beliebiger Länge auszuführen sind, andererseits aber die Möglichkeit besteht, Rohrverbinder unmittelbar im Bereich des Schalldämpfers einzusetzen, so daß eine Bau- und Montageweise gegeben ist, die wesentlich kompakter baut und geringere Baulängen in Anspruch nimmt.

Zur Lösung dieser Aufgabe ist ein Schalldämpfer der gattungsgemäßen Art dadurch gekennzeichnet, daß die endweisen Abschlüsse als Ringkappen ausgebildet sind mit U-förmigem Querschnitt, deren äußerer Schenkel dem Außenumfang des äußeren Rohres anliegt, deren innerer Schenkel dem Außenumfang des inneren Rohres anliegt und deren Basis den Zwischenraum zwischen dem äußeren und inneren Rohr abschließt, wobei die an den Rohren anliegenden Schenkel der Ringkappen mit diesen, vorzugsweise mittels Silikonkunststoff, verklebt sind.

Die Ringkappen nach der Erfindung sind für beide Enden des Schalldämpfers gleichförmig ausgebildet. Sie können mit einfachen Blechbearbeitungswerkzeugen hergestellt werden, beispielsweise ist es möglich, sie tief zu ziehen. Sie werden nicht auf einer Drückbank hergestellt. Aufgrund der vollkommen identischen Ausbildung ist die Lagerhaltung wesentlich vereinfacht. Es werden jeweils zwei Ringkappen mit den Öffnungen zueinanderliegend, für die Begrenzung eines Schalldämpfers auf das äußere Rohr aufgesetzt und umfassen auch den Endbereich des schalldämmenden Materials, dem damit ein wesentlich besserer Halt gegeben wird. Es ist damit auch ausgeschlossen, daß eine Fuge zwischen der Endkappe und dem schalldämmenden Material, die aufgrund der Dehnbarkeit der flexiblen Rohre und der Nichtdehnbarkeit des schalldämmenden Materials auftreten kann, sich nachteilig auswirkt.

Nach einer anderen vorteilhaften Ausführungsform ist zur Lösung der Aufgabenstellung ein Schalldämpfer der gattungsgemäßen Art dadurch gekennzeichnet, daß die endweisen Abschlüsse als Ringkappen ausgebildet sind mit U-förmigem Querschnitt, dessen äußerer Schenkel dem Außenumfang des äußeren Rohres anliegt, deren innerer Schenkel dem Außenumfang des inneren Rohres anliegt und deren Basis den Zwischenraum zwischen dem äußeren und inneren Rohr abschließt, wobei an der Endkante oder im Bereich der äußeren Schenkel der Ringkappen ein oder mehrere, nach innen weisende Abbiegungen oder Noppen angeordnet sind, die in eine Rille des äußeren Rohres eingreifen.

Durch eine Klebeverbindung zwischen den Ringkappen und den Rohren wird eine, in erster Linie äußerst dichte Verbindung zwischen diesen Teilen erreicht, die jedoch auch mechanisch sehr sicher ist. Durch die Anordnung von Noppen nach der zweiten Alternative wird eine formschlüssige Verbindung zwischen den Ringkappen und den Rohren erreicht, die mechanisch eine höhere Festigkeit und Sicherheit haben kann als eine Klebeverbindung, jedoch hinsichtlich der absoluten Abdichtung u.U. Wünsche offen läßt. Je nach Einsatzzweck des Schalldämpfers ist die eine oder die andere Verbindung nach diesen beiden Alternativen vorzuziehen, es besteht jedoch auch die Möglichkeit für besondere Zwecke die beiden Verbindungsarten, nämlich die Klebeverbindung und die formschlüssige Verbindung zwischen den endweisen Abschlüssen und den Rohren miteinander zu kombinieren. Es wird dann eine Verbindung erreicht die höchsten Ansprüchen an Dichtigkeit einerseits und mechanischer Sicherheit und Festigkeit andererseits genügt und zwar unter allen Bedingungen.

Nach einer Weiterbildung der Erfindung sind die Abbiegungen oder Noppen derart angeordnet, daß sie in eine Rille des inneren Rohres angreifen, so daß damit weder zwischen den Ringkappen und dem äueren Rohr, noch zwischen den Ringkappen und dem inneren Rohr beispielsweise ein Abgleiten oder eine Verschiebung der Ringkappen im Betrieb nicht möglich ist. Es wird dadurch eine sichere und feste mechanische Verbindung zwischen dem gesamten Schalldämpferaufbau und dem inneren Gas leitenden Rohr hergestellt.

Zweckmäßig ist das innere Rohr an einer Seite oder auch beiderseits der Ringkappen zum Einsetzen eines Rohrverbinders verlängert. Auf diese Verlängerungen lassen sich handelsübliche Rohrverbinder aufsetzen, dadurch entsteht eine sehr kompakte kurze Bauweise. Die aufgesetzten handelsüblichen Rohrverbinder umgreifen das innere Rohr von außen und können dann auch mit ihrer Endkante gegebenenfalls unmittelbar an die Basis der Ringkappen anschließen. Gegebenenfalls läßt sich dann sogar an dieser Stelle eine zusätzliche starre Verbindung zwischen Ringkappe und Rohrverbinder herstellen. Durch diese Ausbildung ergibt sich eine weitere Möglichkeit der mechanisch sehr festen und dichten Verbindung zwischen dem Schalldämpfer und dem zuführenden bzw. fortführenden Rohren.

Die Erfindung wird nachstehend anhand eines Ausführungsbeispiels mit Bezug auf die Zeichnungen näher erläutert. In den Zeichnungen zeigen:

Fig. 1 einen Querschnitt durch einen Schalldämpfer nach der Erfindung, der in der Mittelachse abgebrochen ist,

Fig. 2 perspektivische Ansicht eines Details.

Ein gerilltes, vorzugsweise flexibles Rohr 1 ist an der Mittelachse 1a geschnitten und mit seinen etwa sinusförmig verlaufenden Rillen im Schnitt dargestellt. Die Lochungen 2 im Bereich des Schalldämpfers sind nur teilweise wiedergegeben. Sie sind üblicherweise als kurze Schlitze im Verlauf der Rillen bzw. Rippen ausgebildet. Im Bereich dieses gelochten Teils des Rohres 1 ist es mit schalldämmendem Material, beispielsweise in Form von Glasfasermatten, die mit Kunststoff gebunden sein können, umgeben. Dieses schalldämmende Material ist außen von einem weiteren Rohr 4 umgeben, das dicht ausgebildet ist. Das Rohr 4 kann ebenfalls gerillt und vorzugsweise flexibel ausgebildet sein.

Die endweisen Abschlüsse 5 dieses Schalldämpfers bestehen aus Ringkappen 6 von U-förmigem Querschnitt. Der innere Schenkel 9 der Ringkappen 6 liegt an der Außenfläche des inneren Rohres 1 an, der äußere Schenkel 7 der Ringkappe 6 liegt auf der Außenfläche des äußeren Rohres 4 auf, und die Basis 11 verbindet diese beiden Schenkel miteinander und schließt damit den Schalldämpfer in axialer Richtung ab. Dadurch wird das Schalldämpfermaterial 3 auch gehalten.

Die Ringkappen 6 sind mit dem Außenumfang 10 des inneren Rohres sowie mit dem Außenumfang 8 des äußeren Rohres 4 verklebt, und zwar vorzugsweise mit einem Silikonkunststoff, der zwischen die Schenkel 7 und 9 und den Außenumfang 8 bzw. 10 der beiden Rohre eingebracht ist und die Rillen ausfüllt.

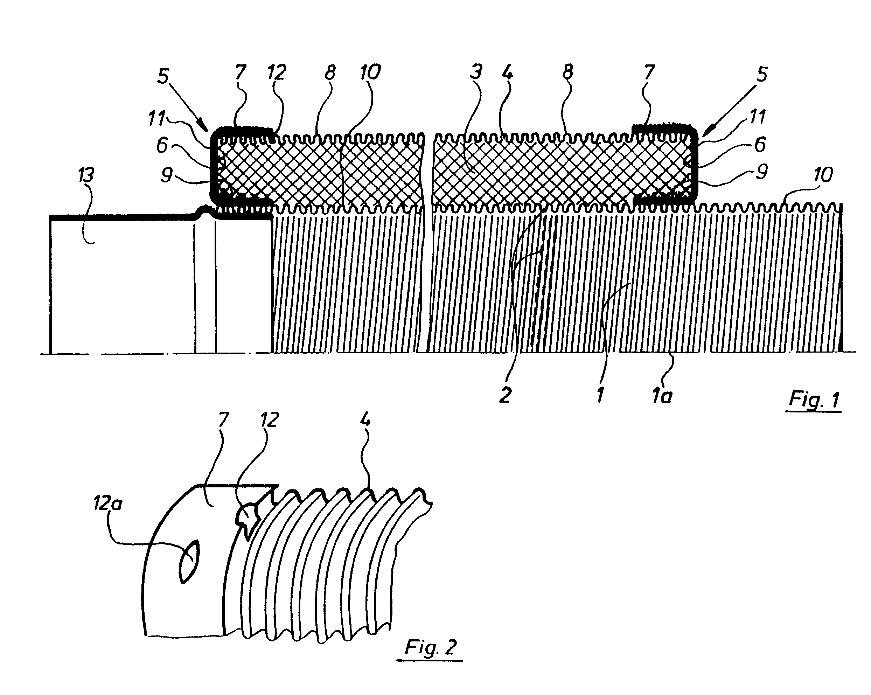

Eine sichere und feste mechanische Verbindung zwischen den Ringkappen und dem äußeren Rohr erfolgt durch Abbiegungen 12 an der Endkante der äußeren Schenkel 7 in die Rillen hinein, wie das in Figur 2 dargestellt ist. Eine weitere Möglichkeit der mechanischen Verbindung zwischen den Ringkappen und dem äußeren Rohr 4 kann durch eingedrückte Noppen 12a in der Fläche des äußeren Schenkels 7 der Ringkappen 11 erfolgen, wie das ebenfalls in Figur 2 dargestellt ist. In gleicher Weise kann auch eine mechanische Verbindung zwischen dem inneren Schenkel 9 der Ringkappen und dem Außenumfang 10 des inneren Rohres 1 hergestellt werden. Dabei ist davon auszugehen, daß die Rillen in den Rohren 1 und 4 schraubenförmig angeordnet sind, so daß die Ringkappen 6 von dem Ende des inneren Rohres her bzw. dem Ende des äußeren Rohres her auf diese Rohre aufzuschrauben sind.

In dem linken Teil der Figur 1 ist dargestellt wie ein Rohrverbinder 13 in das innere Rohr 1 eingesetzt ist, und zwar innerhalb der Ringkappe 6, so daß in diesem Bereich die Rohrwandung des inneren Rohres 1 zwischen dem inneren Schenkel 9 der Ringkappe 6 und dem Einsteckflansch des Rohrverbinders 13 einzuklemmen ist. Dadurch läßt sich eine sehr sichere und feste Verbindung herstellen. Es ist, wenn erwünscht, auch möglich, selbst den inneren Flansch des Rohrverbinders 13 mit Noppen 12a oder Abbiegungen 12 zu versehen und dann in das Rohr 1 einzuschrauben bis zu dem bundförmigen Anschlag.

Auf der rechten Seite der Figur 1 ist das innere Rohr über den Schalldämpferbereich hinaus verlängert. Es läßt sich dort ein Rohrverbinder aufsetzen, der einen Verbinderflansch hat, der den äußeren Umfang 10 des inneren Rohres 1 übergreift und bis gegen die Basis 11 der Ringkappe des Schalldämpfers anstößt. Wenn erwünscht, kann jedoch auch hier das überstehende Ende des inneren Rohres 1 abgeschnitten werden, so daß auch hier ein Rohrverbinder einzusetzen ist wie auf der linken Seite der Figur 1.

**Patentansprüche**

1. Schalldämpfer für Gase führende Leitungen, bestehend aus einem gerillten und gelochten, flexiblen Rohr (1), das zumindest im Bereich der Lochungen (2) von einem schalldämmenden Material, beispielsweise in Form von Glasfasermatte umgeben und mit einem äußeren umgebenden Rohr (4), das ebenfalls gerillt und flexibel ausgebildet sowie mit endweisen Abschlüssen (5) versehen ist, dadurch gekennzeichnet, daß die endweisen Abschlüsse (5) als Ringkappen (6) ausgebildet sind mit U-förmigen Querschnitt, deren äußerer Schenkel (7) dem Außenumfang (8) des äußeren Rohres (4) anliegt, deren innerer Schenkel (9) dem Außenumfang (10) des inneren Rohres (1) anliegt und deren Basis (11) den Zwischenraum zwischen dem äußeren und inneren Rohr abschließt, wobei die an den Rohren (1 und 4) anliegenden Schenkel (7 und 9) der Ringkappen (6) mit diesen, vorzugsweise mittels Silikonkunststoff, verklebt sind.

2. Schalldämpfer für Gase führende Leitungen, bestehend aus einem gerillten und gelochten, flexiblen Rohr (1), das zumindest im Bereich der Lochungen (2) von einem schalldämmenden Material, beispielsweise in Form von Glasfasermatte umgeben und mit einem äußeren umgebenden Rohr (4), das ebenfalls gerillt und flexibel ausgebildet sowie mit endweisen Abschlüssen (5) versehen ist, dadurch gekennzeichnet, daß die endweisen Abschlüsse (5) als Ringkappen (6) ausgebildet sind mit U-förmigen Querschnitt, deren äußerer Schenkel (7) dem Außenumfang (8) des äußeren Rohres (4) anliegt, deren innerer Schenkel (9) dem Außenumfang (10) des inneren Rohres (1) anliegt und deren Basis (11) den Zwischenraum zwischen dem äußeren und inneren Rohr abschließt, wobei an der Endkante oder im Bereich der äußeren Schenkel (7) der Ringkappen (6) ein oder mehrere, nach innen weisende Abbiegungen (12) oder Noppen (12a) angeordnet sind, die in eine Rille des äußeren Rohres (4) eingreifen.

3. Schalldämpfer nach Anspruch 2, dadurch gekennzeichnet, daß die Abbiegungen (12) oder Noppen (12a) derart angeordnet sind, daß sie in eine Rille des inneren Rohres (1) eingreifen.

4. Schalldämpfer nach Anspruch 1 oder 2, dadurch gekennzeichnet, das daß innere Rohr (1) beiderseits der Kappen (6) zum Einsetzen eines Rohrverbinders (13) verlängert ist.

5. Schalldämpfer nach Anspruch 1 oder 2, dadurch gekennzeichnet, das daß innere Rohr (1) an einem Ende über die Ringkappe (6) hinaus zum Ein- oder Aufsetzen eines Rohrverbinders (13) verlängert ist.

**Claims**

1. Sound absorber for gas pipes, consisting of a grooved and perforated flexible tube (1) which is surrounded at least in the region of the perforations (2) by a sound-absorbent material, in the form of glass fibre mat, for example, and provided with an external surrounding tube (4) which is likewise of grooved and flexible construction, and with terminal closure elements (5), characterized in that the terminal closure elements (5) are constructed as annular caps (6) with a U-shaped cross-section, the outer member (7) of which abuts the external circumference (8) of the external tube (4), the inner member (9) of which abuts the external circumference (10) of the internal tube (1), and the base (11) of which closes the interstice between the external and internal tubes, whilst the members (7 and 9) of the annular caps (6) abutting the tubes (1 and 4) are glued to the latter, preferably using silicone plastic.

2. Sound absorber for gas pipes, consisting of a grooved and perforated flexible tube (1) which is surrounded at least in the region of the perforations (2) by a sound-absorbent material, in the form of glass fibre mat, for example, and provided with an external surrounding tube (4) which is likewise of grooved and flexible construction, and with terminal closure elements (5), characterized in that the terminal closure elements (5) are constructed as annular caps (6) with a U-shaped cross-section, the outer member (7) of which abuts the external circumference (8) of the external tube (4), the inner member (9) of which abuts the external circumference (10) of the internal tube (1), and the base (11) of which closes the interstice between the external and internal tubes, whilst one or more inward pointing angled parts (12) or bosses (12a) are arranged at the terminal edge or in the region of the outer members (7) of the annular caps (12), which engage into a groove of the external tube (4).

3. Sound absorber according to Claim 2, characterized in that the angled parts (12) or bosses (12a) are arranged so that they engage into a groove of the internal tube (1).

4. Sound absorber according to Claim 1 or 2, characterized in that the internal tube (1) is prolonged on both sides of the caps (6) for the insertion of a tube connector (13).

5. Sound absorber according to Claim 1 or 2, characterized in that the internal tube (1) is prolonged at one end beyond the annular cap (6) for the insertion or attachment of a tube connector (13).

**Revendications**

1.- Silencieux pour conduites véhiculant des gaz, formé d'un tube flexible ondulé et perforé (1) qui, au moins dans la zone des perforations (2), est entouré par une matière insonorisante ayant la forme, par exemple, d'un mat en fibres de verre et comportant un tube d'enveloppement extérieur (4) qui est également ondulé et flexible et est pourvu d'éléments de fermeture d'about (5), caractérisé en ce que les éléments de fermeture d'about (5) ont la forme de coiffes annulaires (6) de section transversale en U, dont l'aile extérieure (7) est appliquée sur la périphérie externe (8) du tube extérieur (4), l'aile intérieure (9) est appliquée sur la périphérie externe (10) du tube intérieur (1) et la base (11) ferme l'espace entre les tubes extérieur et intérieur, les ailes (7 et 9) des coiffes annulaires (6) appliquées sur les tubes (1 et 4) étant collées à celles-ci, de préférence à l'aide d'une matière à base de silicone.

2.- Silencieux pour des conduites véhiculant des gaz, formé d'un tube flexible ondulé et perforé (1) qui, au moins dans la zone des perforations (2) est entouré par une matière insonorisante ayant la forme, par exemple, d'un mat en fibres de verre et comportant un tube d'enveloppement extérieur (4) qui est également ondulé et flexible et est pourvu d'éléments de fermeture d'about (5), caractérisé en ce que les éléments de fermeture d'about (5) ont la forme de coiffes annulaires (6) de section transversale en U, dont l'aile extérieure (7) est appliquée sur la périphérie externe (8) du tube extérieur (4), l'aile intérieure (9) est appliquée sur la périphérie externe (10) du tube intérieur (1) et la base (11) ferme l'espace entre les tubes extérieur et intérieur, un ou le bord d'extrémité ou la zone de l'aile exterieure (7) des coiffes annulaires (6) présentant un ou plusieurs défoncements (12) ou tétons (12a) dirigés vers l'intérieur qui s'engagent dans une ondulation du tube extérieur (4).

3.- Silencieux suivant la revendication 2, caractérisé en ce que les défoncements (12) ou les tétons (12a) sont disposés d'une manière telle qu'ils s'engagent dans une ondulation du tube intérieur (1).

4.- Silencieux suivant la revendication 1 ou 2, caractérisé en ce que le tube intérieur (1) est prolongé de part et d'autre des coiffes (6) en vue de l'insertion d'un raccord de tube (13).

5.- Silencieux suivant la revendication 1 ou 2, caractérisé en ce que le tube intérieur (1) est prolongé à une extrémité au-delà de la coiffe annulaire (6) pour la mise en place d'un raccord de tube (13) à l'intérieur du tube ou sur celui-ci.

Fig. 1

Fig. 2

0 118 842